# EUROPEAN PATENT SPECIFICATION

(11) **EP 0 351 609 B1**
(45) Date of publication and mention of the grant of the patent: **01.09.1993**
(21) Application number: 89111971.1
(22) Date of filing: 30.06.1989
(51) Int. Cl.: G01D 5/243

(54) **A position transducer**
Positionsumsetzer
Transducteur de position

(30) Priority: 22.07.1988 IT 4574988
(43) Date of publication of application: 24.01.1990
(73) Proprietor: ZELTRON - Istituto Zanussi per la Ricerca S.p.A., I-33030 Campoformido(Udine) (IT)
(72) Inventor: Boscolo, Antonio, I-34144 Trieste (IT); Medeot, Silvana, I-34070 Mariano del Friuli (Gorizia) (IT); Arrigoni, Giancarlo, I-33100 Udine (IT)
(74) Representative: Herrmann-Trentepohl, Werner, Dipl.-Ing.

(56) References cited:
- EP-A- 0 182 085
- DE-A- 2 429 060

## Description

The present invention relates to a position transducer as stated in the preamble of the main claim.

A position transducer is a means for transforming the position of a control element along a direction, within a predetermined field, into a corresponding different physical quantity, such as an electrical signal.

The DE-A-2 429 060 discloses a position transducer comprising an element movable along a predetermined direction relative to a reference body. The reference body comprises a coil adapted to generate an electromagnetic field. The device measures position changes by means of an high frequency coil.

The EP-A-0 182 085 discloses a position transducer which comprises a drive winding for establishing a forward field, and an electrically conductive screen which is displaceable relative to a sense winding (coil).

The object of the present invention is to provide a position transducer which shows high reliability and compactness and, in particular, can also be used in hostile environments.

These objects are achieved according to the invention by a position transducer as characterized in the main claim.

Preferably, the coil is connected in parallel to at least one capacitor with which it forms a resonant circuit.

The features and advantages of the invention will become clearer from the following description, intended solely as a nonrestrictive example, with reference to the adjoined drawings in which
Fig. 1 shows the circuit diagram of an inventive position transducer;
Fig. 2 shows a schematic top view of the basic components of the position transducer according to a preferred embodiment.

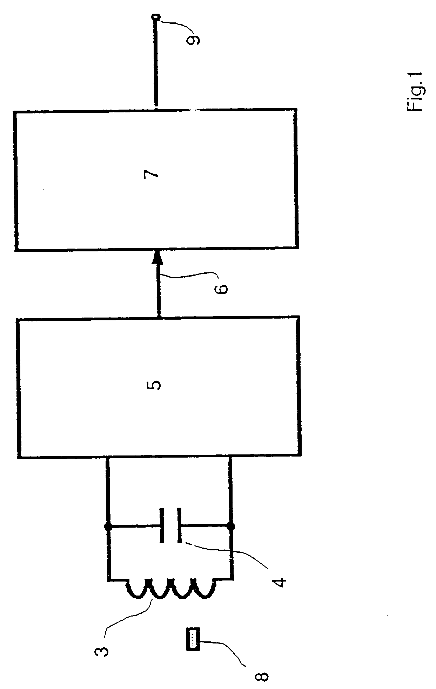

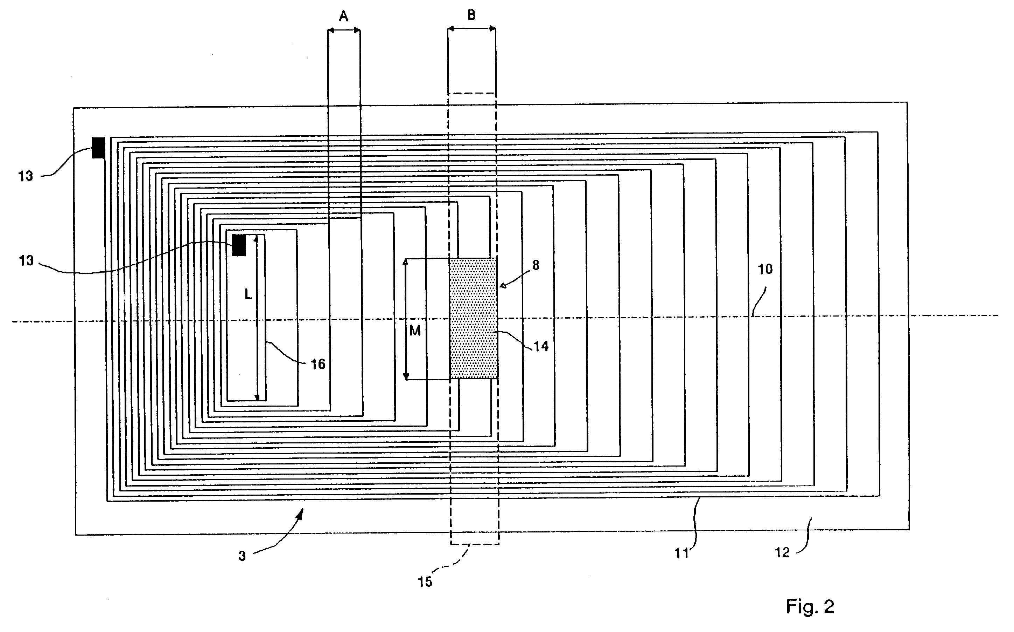

Referring to Fig. 1, the position transducer comprises essentially a coil 3 connected in parallel to at least one capacitor 4 with which it constitutes an LC parallel circuit resonant at a frequency Fo. Resonant circuit 3, 4 constitutes, for example, the load of an oscillator 5 whose output 6 drives a peak detector 7. At frequency Fo, coil 3 generates an electromagnetic field in which a slider 8 is immersed that is movable relative to coil 3 along a predetermined direction indicated as 10 in Fig. 2.

According to an aspect of the invention, coil 3 comprises turns extending on a substantially flat surface passing along a straight line parallel to that which characterizes shifting direction 10 of slider 8. The latter is adjacent coil 3 and, in practice, its shifting direction 10 can be considered for simplicity's sake to be coincident with the aforesaid parallel line. Preferably, the turns of coil 3 consist of conductive tracks 11 deposited on a printed circuit base 12, with corresponding terminals 13 for connection to the remaining part of the circuit of Fig. 1.

Slider 8, which is preferably flat to allow for more compact dimensions, comprises essentially an element 14 realized in nonferromagnetic conductive material with high dissipation (for example stainless steel), coupled electromagnetically with coil 3.

For example, element 14 is mounted on a nonconductive body 15 (shown by the broken line in Fig. 2) provided with molded edges (not shown) which engage corresponding edges of base 12 in such a way as to be able to slide relative thereto along direction 10.

Preferably, the turns of coil 3 have a substantially quadrangular shape and are staggered, at least in one direction (toward the right in Fig. 2), along shifting direction 10 of slider 8.

In particular, the turns of coil 3 are staggered at a pitch or gradient *A* that is preferably constant and equal to or less than length *B* of element 14 regarded along direction 10.

Furthermore, the turns of coil 3 are preferably close together in the direction at right angles to direction 10, and width *L* of smallest turn 16, regarded along this transverse direction, is at least equal to width *M* of element 14 of the slider.

In operation, oscillator 5 supplies parallel circuit 3, 4 with a preferably sinusoidal current having a constant mean value in such a way that circuit 3, 4 is resonant at frequency Fo, as already mentioned, and has a quality factors *Q* influenced by the power dissipated by element 14 of the slider, which is coupled electromagnetically with coil 3. This coupling (and thus the power dissipated by element 14) is greatest when slider 8 is located in correspondence with (smallest) central turn 16 of coil 3, whereas it diminishes gradually when slider 8 is shifted toward the outermost turn (toward the right in Fig. 2).

In accordance with this variation in the coupling there is a variation of quality factor *Q* of resonant circuit 3, 4, which instead maintains substantially the same resonant frequency Fo, as has also been proven experimentally. Obviously, when quality factor Q varies, the amplitude of the sinusoidal signal present at output 6 of oscillator 5 also varies proportionally.

In a way known as such, the sinusoidal signal produced by oscillator 5 is transformed by peak detector 7 into a continuous signal.

Ultimately, a continuous signal is present at output 9 of peak detector 7 whose value is proportional to the position of element 14 of the slider along its shifting direction 10 relative to coil 3. In particular, this value increases with the shift of slider 8 from central turn 16 to the outermost turn of coil 3.

Preferably, oscillator 5 is expediently dimensioned to work in class B in such a way that its output signal has a high dynamic value and the total transducer means is particularly sensitive.

Furthermore, in the example described, the particular geometrical and dimensional interrelationship between coil 3 and element 14 as described above contributes advantageously, as has also been proven experimentally, to producing a substantially linear relation between the position of slider 8 along direction 10 and the voltage at output 9 of peak detector 7.

Furthermore, the typically selective frequency response curve of the parallel resonant circuit in which coil 3 is preferably connected allows for a signal to be obtained at output 6 of oscillator 5 whose amplitude varies considerably upon variation of the position of slider 8 along its shifting direction 10.

This makes it possible for the inventive position transducer to have, advantageously, an elevated sensitivity so that it is unnecessary to use active amplification means (which always involve distortion) for the signal produced by oscillator 5. Consequently, the electric circuit of the transducer is also particularly economical.

This description clearly indicates the constructional simplicity of the inventive position transducer, which can be realized with extremely reduced dimensions, in particular in terms of the thickness of coil 3 and slider 8 of Fig. 2. The transducer is furthermore particularly reliable due to the total absence of electric sliding contacts between elements 3 and 8 and, unlike conventional potentiometers, it can be used even in hostile environments. For example, it can be used, without any danger of the materials deteriorating, inside a refrigerator or a freezer, where the environment is very cold and humid.

Obviously, the described position transducer can be modified in numerous ways falling within the scope of the invention.

For example, pitch *A* between the turns of coil 3 can be variable, also exponentially, and in this case length *B* of element 14 will preferably be equal to or greater than the smallest helical pitch of the coil. Naturally, in this case the relation between the position of slider 8 along shifting direction 10 and the value of the signal at output 9 of peak detector 7 will also vary accordingly.

Furthermore, coil 3 can be shaped in different ways, for example with a curved configuration, and the electric circuit for detecting the signal corresponding to the position of slider 8 can also be realized differently.

Finally, although this involves less linear and precise operation and requires expedient circuit modifications within the reach of an expert in the field, capacitor 4 can be omitted from the position transducer, or it can form with coil 3 a serial, instead of a parallel, resonant circuit, or element 14 can be made of ferromagnetic conductive material. In this latter case, the general operation of the transducer is substantially unchanged, the difference lying in the influence of element 14 on quality factor *Q* of the resonant circuit.

## Claims

1. A position transducer comprising a slider (8) movable along a predetermined direction (10) relative to a reference body (12), wherein the reference body comprises a coil (3) adapted to generate an electromagnetic field and wherein the slider (8) comprises an element (14) made of conductive material adjacent the coil (3) and coupled electromagnetically therewith, **characterized** in that the coil (3) is provided with turns extending on a substantially flat surface passing along a straight line parallel to the predetermined direction (10).

2. The position transducer of claim 1, **characterized** in that the coil (3) is connected in parallel to at least one capacitor (4) with which it forms a resonant circuit.

3. The position transducer of claim 1, **characterized** in that the element (14) of the slider (8) is made of nonferromagnetic conductive material.

4. The position transducer of claim 1, **characterized** in that the pitch (*A*) between the turns of the coil (3) along the straight line is equal to or less than the length (*B*) of the element (14) of the slider (8) along the predetermined direction (10).

5. The position transducer of claim 1, **characterized** in that the pitch (*A*) between the turns of the coil (3) along the straight line is variable and the length (*B*) of the element (14) of the slider (8) along the predetermined direction (10) is at least equal to the smallest helical pitch of the coil.

6. The position transducer of claim 1, **characterized** in that the turns of the coil (3) are substantially quadrangular and staggered, at least in one direction, along the straight line, whereas they are close together in the transverse direction.

7. The position transducer of claim 6, **characterized** in that the width (*M*) of the element (14) of the slider (8) in the transverse direction is equal to or less than the width (*L*) of the smallest turn (16) of the coil (3) in the transverse direction.

8. The position transducer of claim 1, **characterized** in that the turns of the coil (3) comprise corresponding conductor tracks (11) of a printed circuit (12).

9. The position transducer of claim 2, **characterized** in that the resonant circuit (3, 4) is part of an oscillator (5) adapted to drive a peak detector (7) to produce at its output (9) a signal whose value is proportional to the position of the slider (8) along the predetermined direction (10).

## Patentansprüche

1. Positionsumsetzer mit einem Gleitstück (8), das in einer vorgegebenen Richtung (10) relativ zu einem Bezugskörper (12) beweglich ist, wobei der Bezugskörper eine Spule (3) umfaßt, die zu Erzeugung eines elektromagnetischen Feldes geeignet ist, und worin das Gleitstück (8) ein Element (14) aus leitendem Material umfaßt, das nahe bei der Spule (3) liegt und elektro-magnetisch mit dieser gekoppelt ist, **dadurch gekennzeichnet,** daß die Spule (3) mit Windungen versehen ist, die sich auf einer im wesentlichen flachen Oberfläche erstrecken, welche entlang einer geraden Linie parallel zur vorbestimmten Richtung (10) verläuft.

2. Positionsumsetzer nach Anspruch 1, **dadurch gekennzeichnet,** daß die Spule (3) parallel mit mindestens einem Kondensator (4) verbunden ist, mit dem sie einen Resonanzkreis bildet.

3. Positionsumsetzer nach Anspruch 1, **dadurch gekennzeichnet,** daß das Element (14) des Gleitstückes (8) aus nicht-feromagnetischem leitendem Material hergestellt ist.

4. Positionsumsetzer nach Anspruch 1, **dadurch gekennzeichnet,** daß der Windungsabstand (A) zwischen den Windungen der Spule (3) entlang der geraden Linie gleich oder kleiner der Länge (B) des Elements (14) des Gleitstückes (8) entlang der vorbestimmten Richtung (10) ist.

5. positionsumsetzer nach Anspruch 1, **dadurch gekennzeichnet,** daß der Windungsabstand (A) zwischen den Windungen der Spule (3) entlang der geraden Linie veränderlich ist und die Länge (B) des Elements (14) des Gleitstückes (8) entlang der vorbestimmten Richtung (10) zumindest gleich dem kleinsten Windungsabstand der Spule ist.

6. Positionsumsetzer nach Anspruch 1**, dadurch gekennzeichnet,** daß die Windungen der Spule (3) im wesentlichen viereckig und in zumindest einer Richtung entlang der geraden Linie versetzt sind, wobei sie in Querrichtung nahe beieinander liegen.

7. Positionsumsetzer nach Anspruch 6, **dadurch gekennzeichnet,** daß die Breite (M) des Elementes (14) des Gleitstückes (8) in Querrichtung gleich oder kleiner der Breite (L) der kleinsten Windung (16) der Spule (3) in Querrichtung ist.

8. Positionsumsetzer nach Anspruch 1, **dadurch gekennzeichnet,** daß die Windungen der Spule (3) entsprechende Leiterbahnen (F) in einem gedruckten Schaltkreis (12) umfassen.

9. Positionsumsetzer nach Anspruch 2, **dadurch gekennzeichnet,** daß der Resonanzkreis (3,4) Teil eines Oszillators (5) ist, der einen Höchstwertdetektor (7) antreibt, um an seinem Ausgang (9) ein Signal zu erzeugen, dessen Wert proportional der Position des Gleitstückes (8) entlang der vorbestimmten Richtung (10) ist.

## Revendications

1. Transducteur de position comprenant un coulisseau **(8)** mobile suivant une direction prédéterminée **(10)** par rapport à un corps de référence **(12)**, dans lequel le corps de référence comprend une bobine **(3)** conçue pour produire un champ électromagnétique, et dans lequel le coulisseau **(8)** comprend un élément **(14)**, fait d'un matériau conducteur, adjacent à la bobine **(3)** et couplé à celle-ci de façon électromagnétique, caractérisé en ce que la bobine **(3)** est constituée de tours s'étendant sur une surface sensiblement plate passant le long d'une ligne droite parallèle à la direction prédéterminée **(10)**.

2. Transducteur de position selon la revendication 1, caractérisé en ce que la bobine **(3)** est raccordée en parallèle à au moins un condensateur **(4)** avec lequel elle forme un circuit résonnant.

3. Transducteur de position selon la revendication 1, caractérisé en ce que l'élément **(14)** du coulisseau **(8)** est fait d'un matériau conducteur non ferromagnétique.

4. Transducteur de position selon la revendication 1, caractérisé en ce que le pas **(A)**, entre les tours de la bobine **(3)** suivant la ligne droite, est égal ou inférieur à la longueur **(B)** de l'élément **(14)** du coulisseau **(8)** suivant la direction prédéterminée **(10)**.

5. Transducteur de position selon la revendication 1, caractérisé en ce que le pas **(A)** entre les tours de la bobine **(3)** suivant la ligne droite est variable, et en ce que la longueur **(B)** de l'élément **(14)** du coulisseau **(8)** suivant la direction prédéterminée **(10)** est au moins égale au plus petit pas hélicoïdal de la bobine.

6. Transducteur de position selon la revendication 1, caractérisé en ce que les tours de la bobine **(3)** sont sensiblement quadrangulaires et étagés, au moins dans une direction, suivant la ligne droite, tandis qu'ils sont rapprochés les uns des autres dans la direction transversale.

7. Transducteur de position selon la revendication 6, caractérisé en ce que la largeur **(M)** de l'élément **(14)** du coulisseau **(8)** dans la direction transversale est égale ou inférieure à la largeur **(L)** du tour le plus petit **(16)** de la bobine **(3)** dans la direction transversale.

8. Transducteur de position selon la revendication 1, caractérisé en ce que les tours de la bobine **(3)** sont constitués de pistes conductrices correspondantes **(11)** d'un circuit imprimé **(12)**.

9. Transducteur de position selon la revendication 2, caractérisé en ce que le circuit résonnant **(3, 4)** fait partie d'un oscillateur **(5)** conçu pour piloter un détecteur de pic **(7)** pour produire à sa sortie **(9)** un signal dont la valeur est proportionnelle à la position du coulisseau **(8)** suivant la direction prédéterminée **(10)**.
